# EUROPEAN PATENT APPLICATION

(11) **EP 1 267 528 A1**
(43) Date of publication of application: **18.12.2002**
(21) Application number: 01914196.9
(22) Date of filing: 23.03.2001
(51) Int. Cl.: H04L 12/56, H04M 11/00

(54) **INFORMATION PROVIDING SYSTEM**

(30) Priority: 24.03.2000 JP 2000084155
(71) Applicant: World Axle Corporation, Minato-ku, Tokyo 105-0013 (JP)
(72) Inventor: OHTA, Masataka, Yokohama-shi, Kanagawa 225-0011 (JP); FUJIKAWA, Kenji, Kyoto-shi, Kyoto 606-8113 (JP); KITAGAWA, Takurou, Hachioji-shi, Tokyo 193-0823 (JP)
(74) Representative: Körber, Martin, Dipl.-Phys.
(86) International application number: JP0102311
(87) International publication number: WO01071989

(57) **Abstract**

A terminal, with an inquiring function for transmitting unique information, which identifies a user or terminal, to a computer network and obtaining, in response to the unique information, address information that is an address corresponding to the unique information on the computer network or another computer network or information corresponding to the address, and a transmitting function for outputting information to a destination of the address information, and an information providing system, with a responding function for transmitting, via the computer network, the address information in response to the unique information received via the computer network, are provided. When telephone numbers are used as this unique information, it is possible to provide an easy-to-use Internet telephone that can obtain a domain name or an address on the Internet for connecting to an Internet telephone.

## Description

### Technical Field

The present invention relates to a system that is suited to transmitting information, such as audio, via a computer network.

### Related Art

Domain Name System (DNS) is currently provided as a system for converting domain names to addresses (IP addresses) on the Internet, which is one example of a computer network, and so resolve the problem of names. A client that is connected to the Internet can send information to another client who has a unique address on the Internet using a domain name that is easy for the user to understand, and so establish a connection with this other client and exchange information.

At present, a variety of services are provided for using the Internet, aside from the exchanging of electronic mail and the provision of web sites. Such services include services where information is exchanged not just with other clients that are directly connected to the Internet but also with clients and terminals that are connected to a public switching telephone network, as in the case of an Internet phone service. Accordingly, a more flexible name resolving method that can be adapted to such services is required.

Domain names, for example, are assigned to clients on the Internet in a fundamentally unique manner, so that users or other service systems cannot construct another name system. Domain names are also not interchangeable with names on other systems, such as telephone numbers that are assigned on a public switching telephone network. The resolving of names by DNS uses an established protocol, and cannot be adapted to the resolving of names on a new system.

The resolving of names according to DNS is performed by a system where a local name server responds to an inquiry from a client application, such as a resolver. However, when a domain name is not cached in the local name server, the local name server sends an inquiry to another name server, and if the requested data is not found, repeatedly sends inquiries to other name servers, making the system inefficient. In the worst case scenario, inquiries are repeatedly made starting with the top-level root name server so as to trace a tree construction used in the DNS system downwards until the requested data is found. In this way, the resolving process for names on the server side is complicated, and when new service with simple constructions are introduced onto the Internet, DNS is not suited to resolving names for such services.

The inventors of the present application have proposed an extremely simple protocol for realizing a telephone function over the Internet. Conventional Internet telephones that use Session Initiation Protocol (SIP) or H.323 are designed for expanded functions aside from one-to-one telephone calls, which has resulted in them becoming complicated and has stopped them from coming into widespread use. The system proposed by the inventors of the present application uses Nothing Other Than A Simple Internet Phone (NOTASIP) as the protocol to provide basic functioning in the simplest possible manner. This system was developed with the objectives of enabling two terminals to communicate by themselves without using a device like a gatekeeper according to H.323, of providing a system where data aside from audio data is not exchanged, of enabling users to use the main functions of conventional telephones, of not providing functions that are not available (or are hardly used) with conventional telephones, and of making it easy to connect to a PSTN (an existing public switching telephone network).

According to NOTASIP, the CODEC (coder-decoder) and protocol are decided in advance before a call is made, so that negotiation is not performed when a call is made. Next, UDP, which is a connectionless datagram protocol, is used to convert audio into packets and transmit the packets to the callee. To do so, in addition to the callee's telephone number, it is necessary to know the port number, and CODEC, in advance. When making a call using NOTASIP, a stream URL is used as information showing the callee. A stream URL is a method for expressing SDP (Session Description Protocol RFC2327) in the form of a URL, and can be written as shown in the examples given below.
stream://(IP address or domain name):port number/CODEC method
stream ://IP address: 10000/#m=audio::RTP-AVP: 0:5
stream://domain name:10000/#m=audio::RTP-AVP:5:0:1:2

In the second example (the second row), the callee indicated by an IP address, the port number is given as number 10000, the media is given as audio, the protocol is the RTP AV profile, and the CODEC is G.711µlaw. It should be noted that the numbers that are separated by colons following the "RTP-AVP:0:5" part represent the audio coding method, and are defined according to RFC1890.

NOTASIP is both a protocol for a simple IP telephone and an IP telephone system using this protocol, though it is necessary to know the content to be written in the stream URL in advance, so that NOTASIP differs from a conventional telephone exchange system where a connection can be made simply by inputting the callee's telephone number (with the exception of when the region or country, etc., differs).

It is an object of the present invention to provide a system that feels the same to use as a conventional telephone system in that the information required for establishing a connection using NOTASIP is obtained automatically by indicating the callee's telephone number, for example. A further object of the present invention is to provide a system that can make a connection to the Internet and telephone a callee by merely having the caller indicate an extension number or other information that identifies the callee, or without the caller having to think about the differences between the telephone systems in different countries, etc. Yet another object of the present invention is to provide a simple system that facilitates the resolution of names, not just for NOTASIP but for a variety of current and forthcoming services that use the Internet.

### Disclosure of the Invention

The present invention proposes the setting of an information providing system on a computer network such as the Internet, an intranet or LAN. The information providing system sending back not an IP address in response to a domain name but sending back a domain name or IP address in response to unique information, such as a telephone number or other unique information except an address on a computer network, that identifies a user or terminal. The present invention provides an information providing system, including a response function for transmitting, via a computer network and in response to unique information for identifying a user or terminal that has been received via the computer network, address information that is either (1) an address on the computer network or another computer network or (2) information that corresponds to the address. The present invention also provides a terminal, including an inquiring function for transmitting unique information, which identifies a user or terminal, to a destination of an information providing system that is connected to a computer network and obtaining address information that is either (1) an address corresponding to the unique information on the computer network or another computer network or (2) information corresponding to the address, and a transmitting function for outputting information to a destination of the address information, with the terminal being used to transmit information.

Accordingly, the present invention provides, in the information providing system, such as a server, address information is provided according to an information providing method includes a response process for transmitting, via a computer network (hereafter simply "network") and in response to unique information for identifying a user or terminal that has been received via the network, address information such as an address on the Internet (IP address) or a domain name corresponding to the address. On the other hand, a terminal, which is to say, a fixed-line telephone, a mobile telephone, an adapter that connects a telephone to a network, or any of a variety of other types of information terminals transmits information according to an information transmitting method including: an inquiring step for transmitting the unique information to a destination of the information providing system that is connected to a network and obtaining the address information that is an address on the Internet that corresponds to the unique information or other information that corresponds to this address; and a transmitting step for outputting information to a destination of the address information.

On the network including the information providing system and the terminal of the present invention, information is transmitted according to a procedure (protocol) including a first step of transmitting unique information from the terminal to the destination of the information providing system that is connected to a network, a second step in which in response to the unique information, the information providing system sends (back) address information on the computer network to the destination of the terminal that transmitted the unique information; and a third step in which the terminal that transmitted the unique information transmits information to the destination of the address information.

When the information providing system of the present invention is set up on a computer network such as the Internet or an intranet, a terminal can inquire, via the network, to the information providing system about a name (unique information) that is not an Internet address supported by a DNS system but is agreed in advance with the information providing system as an appropriate information or data for indicating a callee. By inquiring in this way, the name can be resolved and the terminal can obtain an Internet address of the recipient or callee. Accordingly, information can be sent via the Internet to another party using a name that is not covered by DNS. With the NOTASIP protocol described above, a telephone call can be made to another user who is connected to the Internet merely by indicating a conventional telephone number as the unique information. It is also unnecessary to store all of the information of users to be called in advance or to regularly update such information. The memory capacity of each terminal can therefore be reduced, and update programs and the like are also unnecessary.

It is preferable for HTTP to be used as the protocol for inquiries and responses sent between the information providing system and the terminal. By using HTTP (HyperText Transfer Protocol), a WWW server or an HTTP server can be used as the information providing system, and the information providing system can be linked to an application, such as a database server, using CGI (Common Gateway Interface). In this way, names (referred to in the specification as "unique information") that are not network addresses can be resolved more easily by a more flexible system.

In the present system, when responding, in addition to or together with the address information, the information providing system may also transmit additional information that is useful for transmitting information to a destination of the address information, with the terminal transmitting information that includes this additional information to the address indicated by the address information. This is to say, with the NOTASIP protocol mentioned above, when an inquiry is made using the unique information, such as the telephone number, of a user, the information providing system can provide the data showing the port number, communication protocol, and audio CODEC as additional information that is sent together with the IP address or domain name, with the terminal transmitting communication packets via the Internet to a desired user by using the received information as a URL.

When making an inquiry or sending a query, the terminal may also transmit the unique information to destinations of a plurality of information providing systems. By arranging the system in advance so that address information is simultaneously sent from a plurality of information providing systems, address information can be obtained with no loss in time in the case where one of the information providing systems is not operational.

When responding, the information providing system may transmit address information for another information providing system that is equipped with the same response function and can execute the same response step. In this case, the terminal again or further transmits the unique information, this time to a destination of the address information of the other information providing system that has been received from the information providing system. This is effective when address information corresponding to the unique information of the inquiry made by the terminal is not ready in the information providing system. Also, if address information for another information providing system is provided to a terminal, it becomes unnecessary to resolve names (unique information) by the communication among the information providing systems. As a result, it becomes unnecessary to share information among information providing systems, to provide a system or protocol for updating information, or to solve complex issues such as the synchronization of the supplied information.

When address information of another information providing system is provided by an information providing system, unique information that is valid or useful for the other information providing system may also be provided. This is useful when an inquiry is made between information providing systems that cover different areas, such as different countries or regions, and when an inquiry is made from an extension line information providing system to an external line information providing system. If, when making an inquiry to another information providing system, a terminal transmits unique information which identifies the user and is valid for that information providing system, the terminal becomes able to use the services of the other information providing system. At the same time, it becomes no longer necessary to have the terminal to store in advance the unique information that is valid for the other information providing system.

When responding, the information providing system may transmit address information of a gateway system that can supply a connection to the user or terminal. As one example, when the user (callee) is not connected to the Internet and is connected to a public switching telephone network, by providing address information for the gateway system that connects the Internet and the public switching telephone network, information can be transmitted to the user terminal connected to the public switching telephone network. It becomes unnecessary for the caller terminal to know in advance whether the callee terminal is connected to the Internet or to a public switching telephone network, so that information can be transmitted to a wide range of terminals using a simple system or protocol.

When responding, an information providing system may transmit unique information that is valid or useful for the gateway system together with the address information of the gateway system. As one example, it is possible to provide a terminal with address information for a gateway system connected to a public switching telephone network in a different region and unique information that has been converted into a telephone number for that region. By transmitting such converted unique information to a gateway system, the terminal can make effective use of the gateway system. In this system, information does not need to be exchanged between gateway systems, so that a complicated protocol and negotiation are unnecessary and information can be transmitted to the callee simply and in a short time.

The system described above can be constructed by providing a program or program product including instructions that can have computers that function as servers or terminals execute the steps and processes of the information providing method and information transmitting method described above. These programs or program products are supplied by storing in suitable mediums that are readable by computers. An information providing system can be realized by installing the program for information providing into an information processing system that functions as a server which is connected to the Internet, a LAN, etc., while a terminal of the present invention can be realized by installing the program for the terminal into a PDA, a personal computer, a mobile phone, or a PHS phone, or by installing the program for the terminal into an adapter that can connect a telephone terminal to the Internet. An information processing system equipped with the functions of both an information providing system and a terminal may also be provided. It should be noted that such programs may be provided by converting them or incorporating the programs into a transfer medium that can be supplied via a computer network.

### Brief Description of the Drawings

FIG. 1 is a representation of an Internet telephone system of an embodiment of the present invention.
FIG. 2 is a functional block diagram showing the outline of a telephone directory server.
FIG. 3 is a functional block diagram showing the outline of a terminal adapter (terminal or client).
FIG. 4 shows the search order of a telephone directory server.
FIG. 5 is a flowchart showing the processes performed by a terminal adapter for resolving a telephone number.

FIG. 6 is a flowchart showing the processes performed by a telephone directory server for resolving a telephone number.

### Best Mode for Carrying Out the Present Invention

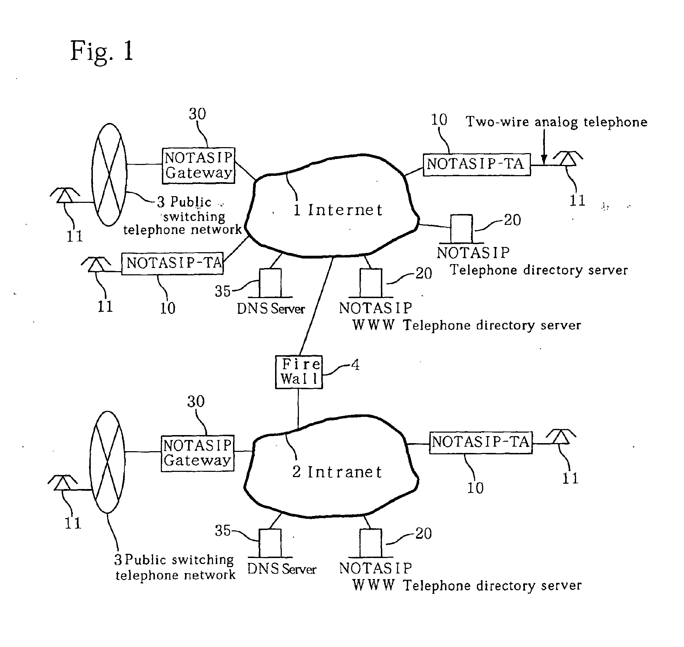

The following describes the present invention with reference to the attached drawings. Fig. 1 is a representation of an Internet telephone system (NOTASIP) according to the present invention. Terminal adapters (hereinafter referred to simply as the "terminals" or the "adapters") 10 called NOTASIP-TAs are used in the present system. An adapter 10 is connected to a conventional two-wire analog telephone set 11 (which may use tone dialing or pulse dialing) and can also be connected to the Internet 1 or an intranet (LAN) 2. Accordingly, the adapter 10 of the present embodiment becomes a user interface for using the analog telephone set 11 itself as a terminal of an Internet telephone system.

First, an example where the adapter 10 connects to an intranet 2 is described. This system shows a model that is used as an extension telephone system in a small office or the like, with the stream URLs that include extension numbers and the IP addresses of each adapter 10 being statically assigned to each adapter 10 as indicated by a scheme provided in advance by the administrator and the system being set up using adapters 10 in which such information has been set. A WWW server (hereafter, "information providing system" or "telephone directory server") 20, including a database ("telephone directory") that makes it possible to find stream URLs from such extension numbers, is also provided on the intranet 2. It is also possible to set telephone directory databases in the storage regions of several of the present adapters 10 and to use such adapters 10 as telephone directory servers 20.

When the user inputs an extension number to make a call using a telephone set 11 connected to the intranet 2, the adapter 10 sends an inquiry to the telephone directory server 20 (the first process), obtains a corresponding stream URL from the telephone directory server 20 (the second process), and makes a connection using this URL to issue a call (the third process). On the other hand, when the user makes an outside call, which is to say, the user indicates an external number (starting with zero, for example), if the callee (an identified user telephone set 11) is present on a public switching telephone network (PSTN) connected to a NOTASIP gateway (hereafter simply "gateway") 30 that is connected to the intranet 2, in the second process the stream URL of the gateway 30 is returned by the telephone directory server 20, so that a call is made to the gateway 30. When a call is received from an external line, an inquiry regarding the extension number is made at the telephone directory server 20 via the gateway 30 that is externally connected (the first process), the stream URL of the extension number is sent to a destination of the caller (the second process), and a call is made to the adapter 10 corresponding to this stream URL using the steam URL (the third process).

The intranet 2 is also connected to the Internet 1 via a firewall 4 or the like, and when the caller with the external number (i.e., the telephone set of the identified user) is connected to the Internet 1 via an adapter 10, a call can be made to the adapter 10 of the callee via the Internet 1. In this case, in response to an inquiry for the external number received from the caller's adapter 10, in the second process, the telephone directory server 20 on the intranet 2 sends back a stream URL of the callee's adapter 10, or a combination of (i) an IP address of another telephone directory server 20 that is connected to the Internet 1 and (ii) a telephone number that is searchable at this other telephone directory server 20.

As examples, when an external number is indicated by adding a zero prefix, the telephone number is sent back with the zero deleted, and when an external number has a country code and the IP address is a telephone directory server 20 that is located in the foreign country, the telephone number without the country code is sent back. The caller's adapter 10 then makes another inquiry for the telephone number to the telephone directory server 20 that is connected to the Internet 1 (the first process), obtains the corresponding stream URL (the second process), and calls the adapter 10 of the callee (the third process).

Here, when the address of the adapter 10 included in the stream URL is not an IP address but a domain name, an inquiry is made to a DNS server 35 connected to the intranet 2 or the Internet 1, and the IP address is obtained.

Almost the same procedure is used when an adapter 10 is connected directly to the Internet 1. This is to say, by inputting a telephone number into the telephone set 11, a telephone directory server 20 connected to the Internet 1 can be used. Accordingly, a call can be made to a callee's adapter 10 that is connected to the Internet 1. A call can be made to a callee's telephone set 11 on a public switching telephone network 3 that is connected to the Internet via the gateway 30.

NOTASIP is an extremely simple protocol used for Internet telephone applications, but when a user makes a telephone call, users may go to the trouble of informing the application of a variety of information (additional information), such as the IP address, port number, and protocol and audio CODEC that are to be used. However, in a network system 8 where adapters 10, which are terminals in this embodiment, and telephone directory servers 20 are connected on the Internet 1 or an intranet 2, an inquiry is made to the telephone directory server 20 using a telephone number whose format is very familiar to users (the first process), and the information required for using a telephone via the networks 1 or 2, including the additional information, can be obtained altogether (the second process). This lowers the burden placed upon users, so that the system provides a more user-friendly Internet telephone system. It becomes possible to use conventional telephone number-style notation in an application that provides a telephone function over the Internet, so that services that feel the same to users as a conventional telephone system can be provided, with users not having to be aware of such services being performed via the Internet.

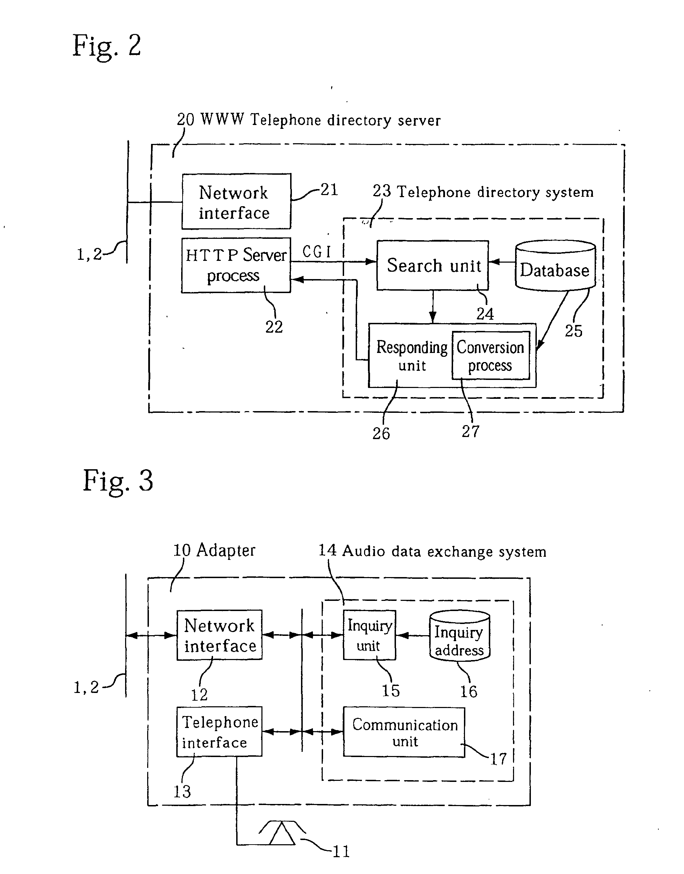

FIG. 2 shows outline of the configuration of the functions of the telephone directory server 20 that is the information providing system of the present embodiment. The telephone directory server 20 includes a network interface (such as an Ethernet interface) 21 that can connect to the Internet 1 or the intranet 2 and a HTTP server process 22 for responding to HTTP. The telephone directory server 20 also includes a telephone directory system 23 that is an application for providing a telephone directory service and is linked to the HTTP server process 22 via CGI. The telephone directory system 23 includes a telephone directory database 25 in which (i) address information composed of domain names (host names) or IP addresses of adapters 10 corresponding to telephone numbers, and (ii) additional information for communicating with the adapter 10, such as a port number, protocol and coding method (CODEC) are stored. A search unit 24 searches the telephone directory database 25 using a telephone number given in an inquiry as a key. A responding unit 26 provides a response function that transmits the result of the search to the caller adapter 10 in the form of a stream URL in the present embodiment.

The responding unit 26 includes a conversion process 27 that has a function for converting a telephone number of the inquiry into information that is useful when the adapter 10 next sends information to a destination of the address information and for transmitting the converted information to the caller adapter 10.

The data in the telephone directory database 25 are stored in the "telephone number, stream URL, comment" format shown below, for example.
123456,stream://IP-address: 10000/#m=audio::RTP-AVP:5, someone
456789, stream://Domain: 10000/#m=audio::RTP-AVP:5, "00I other"
0*, stream://IP-address: 10000/#m:audio::RTP-AVP:5&a=dial:*
0011*, stream://IP-address: 10000/#m:audio::RTP-AVP:5&a=dial:0*

As described above, each stream URL includes address information (an IP address or domain name (host name)), a port number, a protocol, and CODEC. When the address information is not for a callee adapter 10 itself, dial information that is useful for a server or gateway for the callee adapter 10 can be written and transmitted to the caller adapter 10. In the present embodiment, in order to give priority to compatibility with conventional telephones, an example is described where telephone numbers are used as the information (unique information) for identifying a user or the user's terminal, though there is no need for such information to be limited to telephone numbers or for limitations to be placed on the format of the information. However, unique information shall be data that is uniquely fixed or settled at least in certain telephone directory server or servers.

The third and fourth rows of the example above show examples where the asterisk "*" is recognized and processed as a pattern of zero or more digits. In the notation for telephone numbers, an asterisk "*" can be inserted into the following stream URL and returned as part of the telephone number to the caller. In this case, when asterisks are given, conversion can be performed into a valid telephone number for the next server to which the adapter 10 makes an inquiry. In the example on the third row, after an inquiry is made by a telephone number indicated with a zero for external, another inquiry can be made to a telephone directory server 20 on the Internet 1 by the telephone number with the zero having been deleted. Also, in the example on the fourth row, if the country code "0011" is used when making a call, for making an inquiry to a telephone directory server 20 in that country, the telephone number having been converted into number that starts not with the country code but a region code and then sent back to the caller adapter 10.

The telephone directory server 20 of the present embodiment provides a telephone number inquiry service using HTTP, so that the telephone number inquiry service'and the telephone directory system 23 provided as an application can be linked in an extremely easy and smooth manner using CGI. Unlike an inflexible name resolution means where the content of the service is already fixed according to DNS protocol, the content of the telephone directory system 23 can be changed, so that names can be resolved even with formats that are not described in the present specification. The unique information is also not limited to telephone numbers, so that a similar system to the present invention can be used to resolve names for other services that are provided via the Internet or another computer network.

By providing a service that resolves names using HTTP, if necessary the telephone directory server 20 can be provided with a function for authenticating clients in accordance with an HTTP framework, so that the present system can also be made secure.

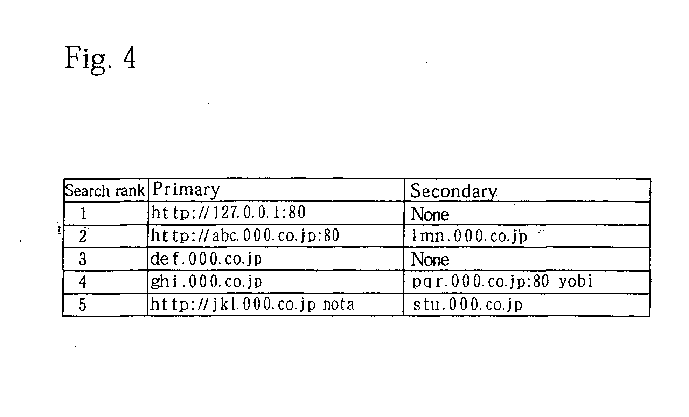

FIG. 3 shows outline of the configuration of the functions of the adapter 10 that is the terminal in the present embodiment. The adapter 10 includes a network interface (such as an Ethernet interface) 12 that can connect to the Internet 1 or the intranet 2, a telephone interface 13 composed of an appropriate IC or the like for providing an interface with an analog telephone, and an audio data exchange system 14 for converting audio information into packets and transmitting the packets via a network, as well as reproducing received packets as audio information. The audio data exchange system 14 includes an inquiry unit 15 for providing a function for sending an inquiry about a telephone number inputted via the telephone set 11 to the telephone directory server 20, and a communication unit 17 for providing a communication function or transmission function including a function for transmitting audio data (DTMF (Dual Tone Multi-Frequency, push signal) is also included), which has been converted into packets, to a destination of the address information received in response to a query. The audio data exchange system 14 also includes inquiry address data 16 storing the addresses of telephone directory servers 20 to which telephone number inquiries are sent, and as shown in FIG. 4, the addresses of a plurality of telephone directory servers are listed in the order in which they are searched.

The search method is as follows. The search starts with inquiring to the telephone directory server 20 with the search rank "1". Search requests are simultaneously issued to the primary and secondary addresses with the same search rank, and the first response to be received is set as the search result. With this arrangement, redundancy is provided in the service system provided by the telephone directory servers, which has the merit that telephone numbers can still be converted even when one server cannot be used. In addition, when a search result is not obtained, the time taken to make another inquiry to the next telephone directory server can be saved. When only one of the primary and the secondary addresses is set, a search request is issued to only one address. When neither the primary address nor the secondary address is set, a search is performed inquiring to the telephone directory server(s) with the next search rank.

When a response of "unregistered" is returned as the search result, a search is performed for the telephone directory server with the next search rank. Also, when a search request is issued to a telephone directory server but no response is received, the adapter judges that the server in question is down. The search timeout that is used in such cases can be set and changed as one of the operation parameters of the present apparatus. On the other hand, when the IP address of a terminal that has requested a search is judged to belong to a group of search prohibited addresses, the server sends a response of "access prohibited" as the search result.

In the terminal (adapter) 10 of the present embodiment, when no response is received from either the primary server or the secondary server, or only a response of "access prohibited" has been received, the search is judged to have failed and a search is not performed for the telephone directory server with the next search rank. By this action, an entry of telephone directory servers with lower search ranks is canceled when the upper rank telephone directory server having the entry for the telephone number is stopped. This action prevents the entries in telephone directory servers with lower search ranks from being unintentionally used. Also, when an entry for the telephone number being searched is present on a level that can be searched, this action prevents unnecessary searches from being made to servers with lower ranks.

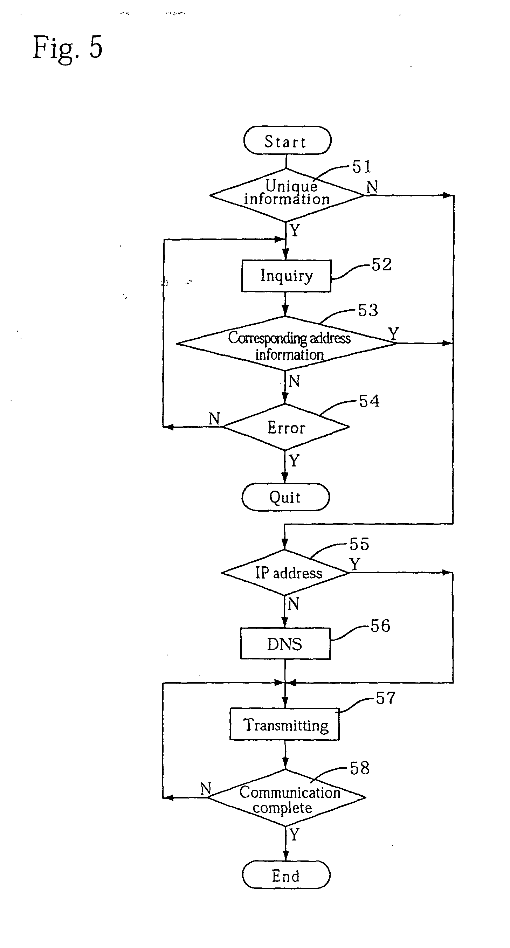

FIG. 5 is a flowchart showing the operation of the adapter 10. First, in step 51; the adapter 10 checks whether a telephone number, which is the unique information used in the Internet telephone system, has been inputted. If at this point, an IP address, a port number, and a CODEC have also been directly inputted, a search of a telephone directory is not performed, and an attempt at connecting to the callee is made in step 55 (described below). When no indication is made of CODEC, the adapter 10 uses a default value (0 or 5).

When a telephone number has been inputted in step 51, in step 52 the inquiry unit 15 sends or transmits telephone number inquiries to telephone directory servers in the order of the addresses given in the inquiry address data 16, and so obtains a corresponding stream URL. In step 53, whether the stream URL corresponding to the telephone number has been obtained in this inquiry process is judged, and an attempt is made at connecting with the callee using this stream URL in the transmitting process of step 57. On the other hand, when the corresponding stream URL has not been obtained, in step 54, whether an error has occurred is judged, as in the "access prohibited" case and the case described above where no response is received. If this is not so, another or further inquiries are sent to the telephone directory servers with the next search rank.

When transmitting, in step 55, whether an IP address has been written directly into the stream URL is judged, and the communication unit 17 transmits information to the destination of this IP address in step 57. On the other hand, if a host name or domain name have been written in the stream URL, the IP address is requested from a DNS server in step 56 before information is transmitted in step 57. If there is a response from the gateway 30 or the adapter 10 of the callee using the obtained stream URL, data that has been converted into packets is transmitted to this IP address until the communication ends in step 58.

When the inputted telephone number is undefined, the user may be informed using a special tone or an audio message such as "The telephone number you have called is not registered in the telephone directory". It is also possible the information on the telephone number that has been received from the telephone directory server 20 to be used by a redial function. When the number is redialed, instead of inquiring to a telephone directory server, an attempt can be made at connecting to the stream URL obtained in the preceding operation.

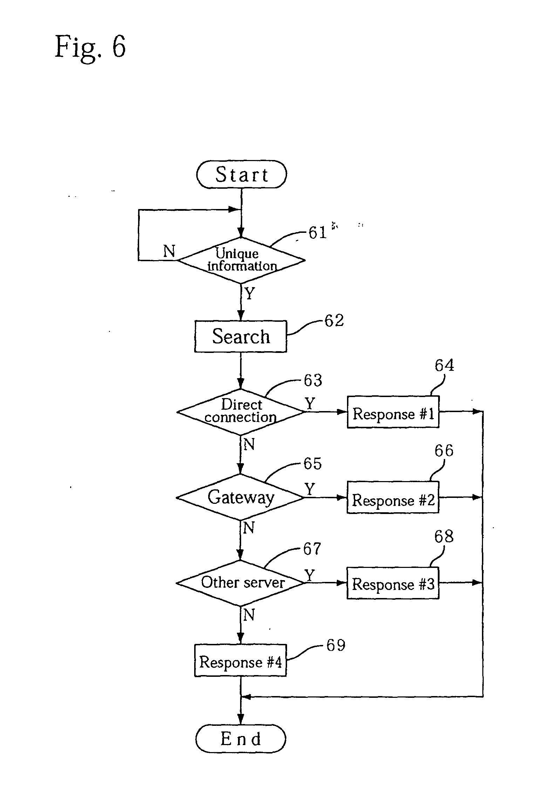

FIG. 6 is a flowchart showing the processing performed by a telephone directory server. First, in step 61, the telephone directory server 20 checks whether an inquiry for unique information (a telephone number) has been received from a caller adapter 10. As described above, the client-side adapter accesses the server with an identified URL according to a "GET" method using HTTP. When the telephone directory server 20 with the identified IP address searches for the telephone number 12345, the request shown below is received.
telnet (IP address of telephone directory)
GET /? 12345 HTTP/1.1

In response to this, in step 62, the telephone directory server 20 searches the telephone directory database 25. In step 63, if it is judged that the target or callee adapter 10 is directly connected to the Internet 1, in step 64, the responding unit 26 transmits the following response #1 to the caller adapter 10.
HTTP/1.1 200 OK
Content-Type: Application/x-stream
stream://user@somedomain:10000/#m=audio::RTP-AVP:5

In the above example, the address information is written using a domain name, though it is also possible to send a response written using an IP address as shown below.
stream://user-ip-address:10000/#m=audio::RTP-AVP: 5

On the other hand, when it is judged in step 65 that the callee adapter 10 is not directly connected to the Internet 1 but is connected to a network, such as a public switching telephone network 3, via a gateway 30, in step 66, the responding unit 26 transmits the response #2 shown below.
HTTP/1.1 200 OK
Content-Type: Application/x-stream
stream://gate-address: 10000/#m=audio::RTP-AVP:5&a =dial:02601234

By the response #2, the caller adapter 10 can transmit the telephone number indicated by "dial" using DTMF to the gateway 30 of the address information. A call is made using DTMF by the gateway 30, so that the identified user's telephone set 11 on the public switching telephone network 3 that is connected to the gateway 30 is called.

When it is necessary to make another inquiry to another telephone directory server 20, a judgment is made in step 67 and in step 68 the responding unit 26 sends 301 (Moved Permanently) or 303 (See Other) back to the client as the HTTP status code. In addition, the responding unit 26 transmits a notification (response #3) to the client-side adapter 10 including information of the other telephone directory server and the content of the inquiry to be sent to the other server, such information being included in the location field shown below.
Location: http://another-server/?012345

In this example, unique information (a telephone number) for the inquiry to the other telephone directory server is appended after the address information of the other telephone directory server. Accordingly, the caller adapter 10 can make an inquiry to the new telephone directory server 20 using this command as it is. A telephone number that is valid for this other telephone directory server 20 can be sent back to the adapter 10 as the telephone number for the inquiry to be made to the other telephone directory server 20.

In cases such as when there is no entry for a telephone number, when the telephone directory function is set at off in the apparatus operation settings, or when a connection has been made from an IP address for which access is prohibited, the response #4 shown below can be sent back in step 69.
HTTP/1.1 404 Not Found

When the search result for the inquired unique information is that the unique information could not be found, by returning an "unclear" message or a status code in the four hundreds to the client, the client-side terminal 10 can then make another inquiry to the telephone directory server 20 with the next search rank and so try to resolve the unique information. On the other hand, when the search result is a server error or "access prohibited", by returning a server error (a status code in the five hundreds) , the client-side adapter 10 can terminate the search at this point without making an inquiry to the next telephone directory server as the same as a time out has occurred.

When a connection is made from an ordinary information terminal that is equipped with a display function, such as a PDA or a personal computer, an HTTP server process can be set so that when the following command is received, a publicly available screen of a WWW telephone directory server 20 is displayed.
telnet (IP address of telephone directory)
GET / HTTP/1.1

While the above explanation describes an example where stream URLs are used as a specific description format, it should be obvious that another description format, such as SDP, may bemused, so long as the information that should be sent back to the client, such as the host name and IP address of the callee, the callee's port number, the protocol used for communication with the callee, and the audio CODEC used for communication with the callee, is transmitted to the client-side adapter 10. The description format can be indicated to the client using a "Content-Type" field.

In this way, the telephone directory server 20 of the present embodiment is not a system that resolves names in the fixed system like DNS, but is a system that is extremely useful for operating name system that uses telephone numbers or any freely chosen names on the Internet. The present system is extremely flexible and has a wide range of applications, so that it should be obvious that the system is not limited to the example of an Internet phone that is given in the present embodiment.

In addition, when a telephone directory server 20 of the present embodiment has a telephone number that should be converted at another server, or the telephone number given to the server cannot be converted by the server itself but the server has information relating to another telephone directory server that can convert this number, instead of merely making an inquiry about this telephone number to another server and then informing the client, the telephone directory server 20 informs the client of the address information of the other server and information that is useful for this other server. This means that on the telephone directory server side, it is not necessary to make complicated connections to other servers and to spend a large amount of time on negotiation for resolving names. For this reason, a simple system can be used to construct a telephone directory server, and a complicated protocol is not needed. This means that the present invention is a system that is extremely suited to the kind of simple telephone system described in the present embodiment. For an adapter 10 on the client side also, a search result can be obtained in an extremely short time. With this arrangement, it is extremely easy to combine and use telephone directory servers that have different number systems as described above. It is therefore easy to provide a method in which a search for a provided number is first performed as an extension number, with the range of the search then being gradually extended to local area numbers, long-distance numbers, and international numbers.

In the same way, when information is transmitted to a gateway 30, a telephone directory server does not act as a gateway for connection, and a client-side adapter 10 is able to transmit information directly to a gateway on the callee's side via the Internet. This makes the system and the transmission paths of information extremely simple. Since conventional unique information in the form of telephone numbers can be used as the ID information of terminals that are connected to the Internet, a system that is easy to use for ordinary, non-technical users can be provided.

The functioning of a telephone directory server and a terminal adapter disclosed in the present embodiment can be provided as programs or program products, including instructions that can execute the above mention processes, which have been recorded on a suitable recording media such as CD-ROMs or magnetic discs. Such processing can be recorded or stored in advance as executable programs in a suitable recording media, such as the memories, of apparatuses including suitable hardware for a server and/or a terminal adapter, with the programs being loaded and executed by CPUs with suitable timing so to realize the functioning of the information providing system and/or terminal of the present embodiment and the present invention. In addition, the program of the present invention for executing such processes may be provided in a variety of other forms, such as by being incorporated in a medium that can be transferred by communication between computers on the Internet or an intranet, etc.

As described above, the present invention provides an information providing system, a terminal, an information providing method, and an information transmitting method where names, which differ from the DNS system that is conventionally defined on the Internet, and other kinds of unique information can be simply resolved, making the present invention extremely useful for a variety of current and forthcoming services that use the Internet. In particular, with the telephone directory server described above, not just the Internet address to which a connection is to be made, but a variety of other information that is to be indicated to an application, such as a port number, a utilized protocol and audio coding method, can be provided altogether. The present invention provides an Internet telephone system that is easier to use and places a reduced burden on users when a connection is made to an Internet telephone, and so contributes to the increased use of Internet telephones in the future.

While the present invention has been explained by way of an example of a telephone directory server for providing the information required by a simple Internet telephone (NOTASIP) application that is proposed by the inventors of this application, as was mentioned earlier the present invention is not limited to this type of telephone directory servers. In addition, the present invention is not limited to the embodiment given above, and the functions of the present invention as a terminal may be realized by a variety of information processing devices such as PDAs, mobile phones, fixed-line telephones, and personal computers. The information providing system of the present invention can be provided as a single server or as a distributed system in which a database or the like is arranged in a distributed manner. In this way, all of the modifications that are included in the patent claims given below are included in the scope of the present invention.

### Industrial Applicability

A system can be provided for resolving names or other unique information in a telephone directory server for a simple Internet telephone proposed by the inventors of the present application or in another computer network.

## Claims

1. An information providing method, comprising
a responding step for transmitting, via a computer network and in response to unique information, which identifies a user or terminal, that has been received via the computer network, address information that is an address on the computer network or another computer network or information corresponding to the address.

2. An information providing method according to Claim 1,
wherein in the responding step, the unique information is received and the address information is transmitted according to HTTP (HyperText Transfer Protocol).

3. An information providing method according to Claim 1,
wherein in the responding step, additional information, which is useful for sending information to a destination of the address information is transmitted in addition to the address information.

4. An information providing method according to Claim 3,
wherein the unique information is information corresponding to a telephone number, the address information is a domain name or an address on Internet, and the additional information includes information of a port number, a communication protocol, and an audio CODEC.

5. An information providing method according to Claim 1,
wherein in the responding step, the address information of another information providing system that is able to execute a responding step is transmitted.

6. An information providing method according to Claim 5,
wherein in the responding step, the address information of the other information providing system that is able to execute a responding step is transmitted together with unique information that is useful for the other information providing system.

7. An information providing method according to Claim 1,
wherein in the responding step, the address information of a gateway system for supplying connection to the user is transmitted.

8. An information providing method according to Claim 7,
wherein in the responding step, the address information of the gateway system for supplying connection to the user is sent together with unique information that is useful for the gateway system.

9. An information providing method according to Claim 7,
wherein the gateway system connects Internet and a public switching telephone network.

10. An information transmitting method, comprising:
an inquiring step for transmitting unique information, which identifies a user or terminal, to a destination of an information providing system that is connected to a computer network and obtaining, in response to the unique information, address information that is an address on the computer network or another computer network or information corresponding to the address; and
a transmitting step for outputting information to a destination of the address information.

11. An information transmitting method according to Claim 10,
wherein in the inquiring step, the address information corresponding to the unique information is obtained according to HTTP.

12. An information transmitting method according to Claim 10,
wherein in the inquiring step, in addition to the address information, additional information which is useful for sending information to the destination of the address information is obtained, and
in the transmitting step, information is transmitted with the additional information to the destination of the address information.

13. An information transmitting method according to Claim 12,
wherein the unique information is information corresponding to a telephone number, the address information is a domain name or an , address on Internet, and the additional information includes information of a port number, a communication protocol, and an audio CODEC.

14. An information transmitting method according to Claim 10,
wherein in the inquiring step, the unique information is transmitted to destinations of a plurality of information providing systems.

15. An information transmitting method according to Claim 10,
wherein in the inquiring step, unique information is further transmitted to a destinations of another information providing system that has been known by the information providing system.

16. An information transmitting method according to Claim 15,
wherein in the inquiring step, the address information for the other information providing system is obtained together with unique information that is useful for the other information providing system, and the unique information that is useful for the other information providing system is further transmitted to a destination of the address information of the other information providing system.

17. An information transmitting method according to Claim 10,
wherein in the inquiring step, the address information for a gateway system for supplying connection to the user is obtained from the information providing system, and
in the transmitting step, information is transmitted to a destination of the address information of the gateway system.

18. An information transmitting method according to Claim 17,
wherein in the inquiring step, together with the address information for the gateway system for supplying connection to the user is obtained together with unique information that is useful for the gateway system, and
in the transmitting step, the unique information that is useful for the gateway system is transmitted to the destination of the address information of the gateway system.

19. An information transmitting method according to Claim 17,
wherein the gateway system connects Internet and a public switching telephone network.

20. An information transmitting method, comprising:
a first step of transmitting unique information, which identifies a user or terminal, to an information providing system that is connected to a computer network;
a second step in which the information providing system transmits address information that is an address on the computer network or another computer network or information corresponding to the address, to a caller that transmitted the unique information in the first step; and
a third step in which the caller that transmitted the unique information transmits information to a destination of the_address information received in the second step.

21. An information transmitting method according to Claim 20,
wherein in the second step, additional information, which is useful for sending information to the destination of the address information, is transmitted together with the address information, and
in the third step, information is transmitted with the additional information to the destination of the address information.

22. An information transmitting method according to Claim 20,
wherein in the second step, the address information of another information providing system is transmitted together with unique information that is useful for the other information providing system, and
the first step is repeated by the caller and the unique information that is useful for the other information providing system is transmitted to the destination of the address information of the other information providing system.

23. An information transmitting method according to Claim 20,
wherein in the second step, the address information of a gateway system for supplying a connection to the user is transmitted together with unique information that is useful for the gateway system, and
in the third step, the caller outputs the unique information that is useful for the gateway system to a destination of the address information of the gateway system.

24. An information providing system, comprising a response function for transmitting, via a computer network and in response to unique information, which identifies a user or terminal, that has been received via the computer network, address information that is an address on the computer network or another computer network or information corresponding to the address.

25. An information providing system according to Claim 24,
wherein the unique information is information corresponding to a telephone number, and the address information is a domain name or an address on Internet.

26. An information providing system according to Claim 24,
wherein the responding function transmits additional information, which is useful for sending information to a destination of the address information, in addition to the address information.

27. An information providing system according to Claim 24,
wherein the response function is capable of transmitting the address information of another information providing system equipped with the response function and/or the address information of a gateway system for supplying a connection to the user.

28. A terminal, comprising:
an inquiring function for transmitting unique information, which identifies a user or terminal, to a destination of an information providing system that is connected to a computer network and obtaining, in response to the unique information, address information that is an address on the computer network or another computer network or information corresponding to the address; and
a transmitting function for outputting information to a destination of the address information.

29. A terminal according to Claim 28,
wherein the unique information is information corresponding to a telephone number and the address information is a domain name or an address on Internet.

30. A terminal according to Claim 28,
wherein the inquiring function obtains, in addition to the address information, additional information which is useful for sending information to the destination of the address information, and
the transmitting function outputs information to the destination of the address information with the additional information.

31. A terminal according to Claim 28,
wherein the inquiring function is capable of transmitting the unique information to destinations of a plurality of information providing systems or a destination of another information providing system whose address is received from the information providing system.

32. A terminal according to Claim 28,
wherein the inquiring function obtains the address information for a gateway system for supplying a connection to the user from the information providing system, and
the transmitting function transmits information to the destination of the address information of the gateway system.

33. A network system, comprising:
a terminal including an inquiring function for transmitting unique information, which identifies a user or terminal, to a computer network and obtaining, in response to the unique information, address information that is an address on the computer network or another computer network or information corresponding to the address, and a transmitting function for outputting information to a destination of the address information; and
an information providing system including a responding function for transmitting, via the computer network, the address information in response to the unique information received via the computer network.

34. A network system according to Claim 33,
wherein the unique information is information corresponding to a telephone number and the address information is a domain name or an address on Internet.

35. A program including an instruction for having a computer execute a response process for transmitting, via a computer network and in response to unique information, which identifies a user or terminal, that has been received via the computer network, address information-that is an address on the computer network or another computer network or information corresponding to the address.

36. A program according to Claim 35,
wherein the response process includes at least one of:
a process for transmitting, in addition to the address information, additional information that is useful for sending information to a destination of the address information;
a process for transmitting the address information of another information providing system that is able to execute the response process and unique information that is useful for the other information providing system; and
a process for transmitting the address information of a gateway system for supplying a connection to the user and unique information that is useful for the gateway system

37. A program including an instruction for having a computer execute:
an inquiring process for transmitting unique information, which identifies a user or terminal, to an information providing system that is connected to a computer network and obtaining, in response to the unique information, address information that is an address on the computer network or another computer network or information corresponding to the address; and
a transmitting process for outputting information to a destination of the address information.

38. A program according to Claim 37 performs processes,
in the inquiring process, obtaining in addition to the address information, additional information that is useful for sending information to the destination of the address information,
and in the transmitting process, outputting information with the additional information to the destination of the address information.

39. A program according to Claim 37 performs processes,
in the inquiring process, obtaining the address information for another information providing system and also unique information that is useful for the other information providing system, and then transmitting the unique information that is useful for the other information providing system to the destination of the address information of the other information providing system.

40. A program according to Claim 37 performs processes,
in the inquiring process, obtaining the address information for a gateway system for supplying a connection to the user together with the unique information that is useful for the gateway system, and
in the transmitting process, transmitting the unique information that is useful for the gateway system to the destination of the address information of the gateway system.
